# EUROPEAN PATENT APPLICATION

(11) **EP 4 495 063 A1**
(43) Date of publication of application: **22.01.2025**
(21) Application number: 23917195.2
(22) Date of filing: 22.11.2023
(51) Int. Cl.: C01B 17/22, H01M 10/0525, H01M 10/0562

(54) **HIGH-PURITY NANOSCALE LITHIUM SULFIDE AND PREPARATION METHOD THEREFOR**

(30) Priority: 17.01.2023 CN 202310061455
(71) Applicant: Tianqi Lithium Genesis Technology (Shenzhen) Ltd., Shenzhen, Guangdong 518000 (CN)
(72) Inventor: XU, Chuan, Hong Kong Cooperation Zone Shenzhen, Guangdong 518000 (CN); CHEN, Ge, Hong Kong Cooperation Zone Shenzhen, Guangdong 518000 (CN); TIAN, Huan, Hong Kong Cooperation Zone Shenzhen, Guangdong 518000 (CN); YANG, Liu, Hong Kong Cooperation Zone Shenzhen, Guangdong 518000 (CN); ZHONG, Zhaozi, Hong Kong Cooperation Zone Shenzhen, Guangdong 518000 (CN); LEI, Zhen, Hong Kong Cooperation Zone Shenzhen, Guangdong 518000 (CN); SUN, Jiale, Hong Kong Cooperation Zone Shenzhen, Guangdong 518000 (CN)
(74) Representative: MacLachlan & Donaldson
(86) International application number: PCT/CN2023/133215
(87) International publication number: WO 2024/152727

(57) **Abstract**

The present invention relates to the technical field of solid-state lithium battery material, in particular to high-purity nano lithium sulfide and a preparation method thereof. The method comprises the following steps: material purification; nano wet milling; homogeneous reaction; and ball milling, to obtain high-purity nano lithium sulfide. The high-purity nano lithium sulfide of the present invention and a preparation method thereof can achieve high purity, excellent performance, simple operation, and good social and economic benefits.

## Description

### Cross-reference to related applications

This is an application which claims the benefits and priorities of the Chinese Patent Application Number CN 2023100614553, filed on January 17, 2023, and the disclosure of which is incorporated herein by reference in its entirety.

### Technical Field

The present invention relates to the technical field of solid-state lithium battery material, in particular to high-purity nano lithium sulfide and a preparation method thereof.

### Background

In recent years, the new energy vehicle industry has flourished prosperously, but the range anxiety, charging time, safety and other issues of new energy vehicles have hindered the further expansion of the industry. Lithium-sulfur batteries and all-solid-state batteries are considered to be those of the most potentials in the next generation battery technology due to their high energy density. Lithium sulfide can serve as an active material of positive pole for lithium-sulfur batteries and also a key raw material for synthesis of solid electrolytes, and has become a star in the field of rechargeable battery materials. According to in-depth reports on solid-state lithium batteries and on the basis of the existing lithium battery market size, it is estimated that the potential market size of solid-state batteries using lithium sulfide will amount to tens of billions in the future, and the market is positive.

Lithium sulfide, an important component of sulfur-based solid electrolyte, affects the ionic conductivity of solid electrolyte, and is one of the main factors determining solid-state batteries performance. Therefore, quality requirements for lithium sulfide material are increasingly strict. In recent years, relevant studies have shown that the particle size of lithium sulfide has a significant impact on the performance of solid-state batteries. The international journal, Nano Lett*,* reported that the sulfide electrolyte with particle size less than 1µm is more stable in contact with metal lithium, which can reduce the chemical and mechanical failure of solid electrolytes. A recent study by Tianjin University, published in the Journal of Energy Chemistry*,* revealed that the micron grade lithium sulfide used in a positive pole of lithium-sulfur battery is not electrochemical active and is also subject to crushing mechanical damage caused by volume fluctuations. In contrast, nano lithium sulfide can overcome the above defects, and the high specific surface area of nano lithium sulfide facilitates the lithiation/release process, specifically, reducing electrical/ion resistance, increasing capacity, and reducing mechanical stress associated with volume changes and further improving performance. In addition, some veterans of the industry have proposed that magnetic materials have impacts on the performance of solid electrolyte to some extent. Therefore, it is necessary to bring in a demagnetization process in the subsequent preparation process of lithium sulfide to further reduce the content of magnetic material.

CN112678781A discloses a method of preparing lithium sulfide. Specific steps of the method are as follows: grinding mixture: mix and grind a sulfur source and a lithium source while adding hydrazine hydrate, and stop grinding when all hydrazine hydrate is added, to obtain a reaction mass, wherein the sulfur source is sulfur powder, lithium thiosulfate or lithium sulfite, and the lithium source is lithium hydroxide, lithium thiosulfate or lithium sulfite; vacuum defoaming: load the reaction mass in a vacuum defoaming barrel, vacuumize, remain the vacuum state for 1 h - 4 h until all bubbles are eliminated, and restore to the atmospheric pressure, to obtain a lithium sulfide solution; and drying: dry the lithium sulfide solution to obtain lithium sulfide. The method has the following shortcomings: it is unable to prepare high-purity lithium sulfide (purity: > 99.99%); as the reaction system has a large quantity of water, the product, lithium sulfide, has severe agglomeration and large particle size; and as the process requires the vacuum defoaming link, sealing requirements for kettle are strict and scale production is difficult.

### Summary

In order to overcome the first technical defect, the present invention provides a method of preparing high-purity nano lithium sulfide,
comprising the steps below:
a. Material purification
   Purification of reducing agent: purify hydrazine hydrate, anhydrous hydrazine and/or hydramine and remove impurities to obtain a high-purity reducing agent for further use;
   Purification of lithium source: purify a lithium source to obtain a high-purity lithium source, wherein the lithium source is battery grade lithium hydroxide monohydrate, lithium hydroxide anhydrous, high-purity lithium oxide and/or battery grade lithium carbonate;
b. Nano wet milling: take the high-purity reducing agent and high-purity lithium source in step a according to a mole ratio of 1:1 - 3 and blend the same, wherein the particles obtained are the high-purity lithium slurry of nano grade and homogeneous dispersion;
c. Homogeneous reaction: take a high-purity sulfur powder and dissolve the same in the high-purity reducing agent in step a to obtain a sulfur slurry; dropwise add the sulfur slurry and the high-purity lithium source slurry to a reactor at the same time and mix the same; under the protection of inert atmosphere, the mixture begins to react and dry and a small portion of cohesive and high-purity lithium sulfide is obtained;
d. Ball milling: a small portion of cohesive and high-purity lithium sulfide in step c is ball milled and homogeneously dispersed nano and high-purity lithium sulfide.

In step a,
when the lithium source is battery grade lithium hydroxide monohydrate and lithium hydroxide anhydrous, the lithium source is dissolved in high-purity water to prepare lithium solution, and the lithium solution is dried, heated and discomposed to obtain the lithium hydroxide anhydrous with a water content < 5%;
when the lithium source is battery grade lithium carbonate, the lithium source is purified with a carbonation-decomposition method;
when the lithium source is high-purity lithium oxide, no purification is required;
in step a, when the lithium source is battery grade lithium hydroxide monohydrate and lithium hydroxide anhydrous, the lithium solution (Li₂O) prepared is 60 g/L - 80 g/L, dried in vacuum at low temperature of 75°C - 90°C; when the lithium source is battery grade lithium carbonate, the lithium source is mixed with water to prepare a slurry, and the slurry is further purified with the carbonation-decomposition method; and when the lithium source is high-purity lithium oxide, no purification is required.

The purity of high-purity reducing agent is 4N; the purity of battery grade lithium hydroxide monohydrate complies with GB/T 26008-2020; the purity of lithium hydroxide anhydrous complies with YS/T 1568-2022; the purity of high-purity lithium oxide complies with YS/T 968-2014; the purity of battery grade lithium carbonate complies with YS/T 582-2013; and the purity of high-purity sulfur powder is 4N.

In step a, when the high-purity lithium source is battery grade lithium hydroxide monohydrate, lithium hydroxide of large particle size is heated to the temperature less than its smelting point in vacuum or in an inert gas, and the inert gas is allowed to flow or flow through lithium hydroxide until the produced lithium source contains crystals with a water content less than 5% of the lithium source, to obtain a dehydrated high-purity lithium source. By controlling drying temperature, the lithium source containing crystal with water content less than 5% of the lithium source can be obtained through this operation. This operation is to improve reaction activity and reduce water content, wherein the inert gas is nitrogen, argon, a mixture of hydrogen and argon or other gases, and the heating temperature is 200°C - 450°C.

The nano wet milling in step b refers to crush and blend materials through impact effects of a falling grinding medium (such as zirconium oxide balls or steel balls) and grinding effects of the grinding medium and the inner wall of a ball mill.

The blending in step b is carried out through wet milling with the ball mill at 300 rpm - 600 rpm for 1 h - 8 h.

When the reducing agent in step c is hydrazine hydrate and/or anhydrous hydrazine, the high-purity sulfur powder is blended with the reducing agent according to a mole ratio of 1:1 - 3 to prepare a sulfur solution; when the reducing agent is hydroxylamine, the high-purity sulfur powder is blended with hydroxylamine according to a mole ratio of 1:2 - 4 to prepare a sulfur solution; and the mole ratio between the high-purity lithium source slurry and the sulfur solution is Li₂O:S=1: 1 - 3.

In step c, the reaction is started at low temperature first and then high temperature; reaction conditions at low temperature are as follows: the blending speed is 100 rpm - 300 rpm, the speed of high-shear disperser is 2,000 r/min - 5,000 r/min, the temperature is 70°C - 150°C, and the reaction time is 1 h - 3 h; and reaction conditions at high temperature are as follows: the blending speed is 300 rpm - 500 rpm, the temperature is 200°C - 450°C, and the time is 1 h - 3 h.

The ball grinding speed is 300 rpm - 600 rpm and the ball grinding time is 1 h - 8 h in step d.

Demagnetization is carried out at least in step a, b, c or d until the magnetic material is less than 50 ppb, wherein the magnetic field intensity for demagnetization is 8,000 - 12,000 GS.

In order to overcome the second technical defect, the present invention provides high-purity nano lithium sulfide prepared with the method of preparing high-purity nano lithium sulfide.

Preferably, the high-purity nano lithium sulfide product has a particle size of < 1,000 nm, a purity of ≥ 99.99%, and a magnetic material < 50 ppb.

In order to overcome the third technical defect, the present invention provides application of lithium sulfide in solid-state battery.

Preferably, the solid-state battery is a lithium-sulfur battery.

The beneficial effects of the present invention are as follows:
1. The present invention provides high-purity nano lithium sulfide and preparation method thereof, wherein a demagnetization procedure is brought in to reduce the content of magnetic material and improve the material purity and performance, and a vacuum defoaming link is eliminated to reduce sealing requirements for equipment, thus being able to achieving good economic benefits.
2. The present invention provides high-purity nano lithium sulfide and preparation method thereof, wherein materials are wet milled to nano grade in advance first and then processed through the high-shear dispenser. By controlling process parameters, particles obtained can achieve nano grade at one time. Moreover, the particles are purified for two times to achieve 4N purity.

### Brief Description of Drawings

Fig. 1 is the SEM photograph of the product obtained through the method of preparing high-purity nano lithium sulfide.
Fig. 2 is the XRD diagram of the product obtained through the method of preparing high-purity nano lithium sulfide.

### Detailed Description

Embodiments of the present invention are described in detail below with reference to specific embodiments. However, a person skilled in the art should understand that the following embodiments are merely used for illustrating the present invention and should not be constructed as limiting the scope of the present invention. If no specific conditions are specified in embodiments, conventional conditions are followed. Those who do not specify the specific conditions in the embodiments are carried out according to the conventional conditions.

### Embodiment 1

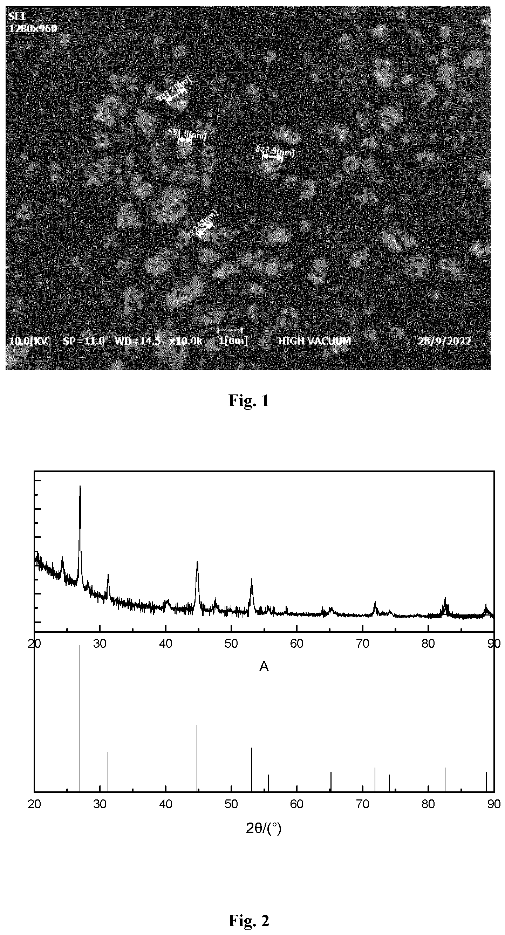

(1) Material purification: Distill and purify a bottle of 500 mL anhydrous hydrazine (hydrazine), available in the market, in vacuum in a fuming hood to obtain high-purity hydrazine for further use; weigh and take 500 g battery grade lithium hydroxide monohydrate and dissolve the same in high-purity water to prepare a lithium solution with 60 g/L Li₂O; evaporate and centrifuge the lithium solution to obtain a wet material; and dry the wet material at 75°C in vacuum for 1 h to obtain a high-purity raw material of lithium hydroxide monohydrate.
(2) Material dewatering: Heat the high-purity raw material of lithium hydroxide monohydrate in step (1) to 200°C under the protection of nitrogen, until a raw material of lithium hydroxide anhydrous with water content < 5%.
(3) Nano wet milling: Add an anhydrous hydrazine solution in a mill pot according to a mole ratio of Li₂O:anhydrous hydrazine=1:1, and ball mill the mixture at 300 rpm in the ball mill for 8 h, to obtain a nano slurry of lithium hydroxide anhydrous.
(4) Homogeneous reaction: Take high-purity sulfur powder and anhydrous hydrazine according to a mole ratio of 1:1 and mix the same to obtain a sulfur slurry for further use; dropwise add the sulfur slurry and a lithium hydroxide slurry at the same time through a peristaltic pump according to a mole ratio of Li₂O:S=1:1 to a reactor with an anchor stirrer and a high-shear dispenser and mix the same; under the protection of an insert gas, start the high-shear dispenser for emulsification, and set a revolving speed of 2,000 r/min; stir the mixture at 100 r/min; after 3 hours of reaction at 70°C, raise the temperature to 450°C and raise the stirring speed to 300 r/min, and turn off the high-shear dispenser; dry the mixture for 1 h; and cohesive primary particles obtained are high-purity nano lithium sulfide.
(5) Ball milling: Load the cohesive particles in the ball mill and ball mill the same at 300 r/min for 5 h, to obtain high-purity nano lithium sulfide.
(6) Demagnetization: After ball milling, load high-purity lithium sulfide in a demagnetizer for demagnetization and set magnetic field intensity at 8,000 GS, to obtain high-purity lithium sulfide with magnetic material less than 50 ppb. The SEM photograph and XRD diagram of products obtained are shown in Fig. 1 and Fig. 2, respectively.

### Embodiment 2

(1) Material purification: Distill and purify a bottle of 500 mL anhydrous hydrazine (hydrazine), available in the market, in vacuum in a fuming hood to obtain high-purity hydrazine for further use; weigh and take 500 g lithium hydroxide anhydrous and dissolve the same in high-purity water to prepare a lithium solution with 70 g/L Li₂O; evaporate and centrifuge the lithium solution to obtain a wet material; and dry the wet material at 80°C in vacuum for 1 h to obtain a high-purity raw material of lithium hydroxide monohydrate.
(2) Material dewatering: Heat the high-purity raw material of lithium hydroxide monohydrate in step (1) to 300°C under the protection of nitrogen, until a raw material of lithium hydroxide anhydrous with water content < 5%.
(3) Nano wet milling: Add an anhydrous hydrazine solution in a mill pot according to a mole ratio of Li₂O:anhydrous hydrazine=1:2, and ball mill the mixture at 600 rpm in the ball mill for 1 h, to obtain a nano slurry of lithium hydroxide anhydrous.
(4) Homogeneous reaction: Take high-purity sulfur powder and anhydrous hydrazine according to a mole ratio of 1:1 and mix the same to obtain a sulfur slurry for further use; dropwise add the sulfur slurry and a lithium hydroxide slurry at the same time through a peristaltic pump according to a mole ratio of Li₂O:S=1:2 to a reactor with an anchor stirrer and a high-shear dispenser and mix the same; under the protection of an insert gas, start the high-shear dispenser for emulsification, and set a revolving speed of 5,000 r/min; stir the mixture at 300 r/min; after 1 hour of reaction at 150°C, raise the temperature to 200°C and raise the stirring speed to 500 r/min, and turn off the high-shear dispenser; dry the mixture for 3 h; and cohesive primary particles obtained are high-purity nano lithium sulfide.
(5) Ball milling: Load the cohesive particles in the ball mill and ball mill the same at 600 r/min for 1 h, to obtain high-purity nano lithium sulfide.
(6) Demagnetization: After ball milling, load high-purity lithium sulfide in a demagnetizer for demagnetization and set magnetic field intensity at 12,000 GS, to obtain high-purity lithium sulfide with magnetic material less than 50 ppb. See Table 1 for purity data of the product.

### Embodiment 3

(1) Material purification: Distill and purify a bottle of 500 mL anhydrous hydrazine (hydrazine), available in the market, in vacuum in a fuming hood to obtain high-purity hydrazine for further use; weigh and take 500 g lithium hydroxide anhydrous and dissolve the same in high-purity water to prepare a lithium solution with 80 g/L Li₂O; evaporate and centrifuge the lithium solution to obtain a wet material; and dry the wet material at 85°C in vacuum for 1 h to obtain a high-purity raw material of lithium hydroxide monohydrate.
(2) Material dewatering: Heat the high-purity raw material of lithium hydroxide monohydrate in step (1) to 450°C under the protection of nitrogen, until a raw material of lithium hydroxide anhydrous with water content < 5%.
(3) Nano wet milling: Add an anhydrous hydrazine in a mill pot according to a mole ratio of Li₂O:anhydrous hydrazine=1:3, and ball mill the mixture at 500 rpm in the ball mill for 4 h, to obtain a nano slurry of lithium hydroxide anhydrous.
(4) Demagnetization: Take and mix high-purity sulfur powder and anhydrous hydrazine according a mole ratio of 1:3 to prepare a sulfur slurry for further use, load the sulfur slurry and lithium hydroxide anhydrous through a peristaltic pump to a demagnetizer for demagnetization, and set magnetic field intensity at 10,000 GS.
(5) Homogeneous reaction: Dropwise add the sulfur solution demagnetized and a lithium hydroxide slurry at the same time through a peristaltic pump according to a mole ratio of Li₂O:S=1:3 to a reactor with an anchor stirrer and a high-shear dispenser and mix the same; under the protection of an insert gas, start the high-shear dispenser for emulsification, and set a revolving speed of 3,000 r/min; stir the mixture at 200 r/min; after 2 hours of reaction at 100°C, raise the temperature to 300°C and raise the stirring speed to 400 r/min, and turn off the high-shear dispenser; dry the mixture for 2 h; and cohesive primary particles obtained are high-purity nano lithium sulfide.
(6) Ball milling: Load the cohesive particles in the ball mill and ball mill the same at 600 r/min for 1 h, to obtain high-purity nano lithium sulfide. See Table 1 for purity data of the product.

### Embodiment 4

(1) Material purification: Distill and purify a bottle of 500 mL hydrazine hydrate (hydrazine), available in the market, in vacuum in a fuming hood to obtain high-purity hydrazine hydrate for further use; weigh and take 500 g lithium hydroxide monohydrate and dissolve the same in high-purity water to prepare a lithium solution with 70 g/L Li₂O; evaporate and centrifuge the lithium solution to obtain a wet material; and dry the wet material at 80°C in vacuum for 1 h to obtain a high-purity raw material of lithium hydroxide monohydrate.
(2) Demagnetization: Load the high-purity raw material of lithium hydroxide monohydrate in the last step in a demagnetizer for demagnetization and set magnetic field intensity at 10,000 GS.
(3) Material dewatering: Heat the high-purity raw material of lithium hydroxide monohydrate in step (1) to 300°C under the protection of nitrogen, until a raw material of lithium hydroxide anhydrous with water content < 5%.
(4) Nano wet milling: Add a hydrazine hydrate solution in a mill pot according to a mole ratio of Li₂O:hydrazine hydrate=1:2, and ball mill the mixture at 600 rpm in the ball mill for 1 h, to obtain a nano slurry of lithium hydroxide anhydrous.
(5) Homogeneous reaction: Take high-purity sulfur powder and hydrazine hydrate according to a mole ratio of 1:1 and mix the same to obtain a sulfur slurry for further use; dropwise add the sulfur slurry and a lithium hydroxide slurry at the same time through a peristaltic pump according to a mole ratio of Li₂O:S=1:2 to a reactor with an anchor stirrer and a high-shear dispenser and mix the same; under the protection of an insert gas, start the high-shear dispenser for emulsification, and set a revolving speed of 5,000 r/min; stir the mixture at 300 r/min; after 1 hour of reaction at 150°C, raise the temperature to 200°C and raise the stirring speed to 500 r/min, and turn off the high-shear dispenser; dry the mixture for 3 h; and cohesive primary particles obtained are high-purity nano lithium sulfide.
(6) Ball milling: Load the cohesive particles in the ball mill and ball mill the same at 600 r/min for 1 h, to obtain high-purity nano lithium sulfide. See Table 1 for purity data of the product.

### Embodiment 5

(1) Material purification: In a fuming hood, weigh and take 500 g lithium hydroxide monohydrate and dissolve the same in high-purity water to prepare a lithium solution with 70 g/L Li₂O; evaporate and centrifuge the lithium solution to obtain a wet material; and dry the wet material at 80°C in vacuum for 1 h to obtain a high-purity raw material of lithium hydroxide monohydrate.
(2) Material dewatering: Heat the high-purity raw material of lithium hydroxide monohydrate in step (1) to 300°C under the protection of nitrogen, until a raw material of lithium hydroxide anhydrous with water content < 5%.
(3) Nano wet milling: Add 4N hydroxylamine reducing agent available in the market in a mill pot according to a mole ratio of Li₂O:hydroxylamine=1:2, and ball mill the mixture at 600 rpm in the ball mill for 1 h, to obtain a nano slurry of lithium hydroxide anhydrous.
(4) Homogeneous reaction: Take high-purity sulfur powder and hydroxylamine according to a mole ratio of 1:2 and mix the same to obtain a sulfur slurry for further use; dropwise add the sulfur slurry and a lithium hydroxide slurry at the same time through a peristaltic pump according to a mole ratio of Li₂O:S=1:2 to a reactor with an anchor stirrer and a high-shear dispenser and mix the same; under the protection of an insert gas, start the high-shear dispenser for emulsification, and set a revolving speed of 5,000 r/min; stir the mixture at 300 r/min; after 1 hour of reaction at 150°C, raise the temperature to 200°C and raise the stirring speed to 500 r/min, and turn off the high-shear dispenser; dry the mixture for 3 h; and cohesive primary particles obtained are high-purity nano lithium sulfide.
(5) Ball milling: Load the cohesive particles in the ball mill and ball mill the same at 600 r/min for 1 h, to obtain high-purity nano lithium sulfide.
(6) Demagnetization: After ball milling, load high-purity lithium sulfide in a demagnetizer for demagnetization and set magnetic field intensity at 12,000 GS, to obtain high-purity lithium sulfide with magnetic material less than 50 ppb. See Table 1 for purity data of the product.

### Embodiment 6

(1) Material purification: In a fuming hood, weigh and take 500 g battery grade lithium carbonate and dissolve the same in high-purity water to prepare a slurry, and process the slurry with a carbonation-decomposition method for one time, to obtain high-purity lithium carbonate.
(2) Nano wet milling: Add 4N hydroxylamine reducing agent available in the market in a mill pot according to a mole ratio of Li₂O:hydroxylamine=1:2, and ball mill the mixture at 600 rpm in the ball mill for 1 h, to obtain a homogeneous nano slurry of lithium carbonate.
(3) Homogeneous reaction: Take high-purity sulfur powder and hydroxylamine according to a mole ratio of 1:2 and mix the same to obtain a sulfur slurry for further use; dropwise add the sulfur slurry and a high-purity lithium carbonate slurry at the same time through a peristaltic pump according to a mole ratio of Li₂O:S=1:4 to a reactor with an anchor stirrer and a high-shear dispenser and mix the same; under the protection of an insert gas, start the high-shear dispenser for emulsification, and set a revolving speed of 5,000 r/min; stir the mixture at 300 r/min; after 1 hour of reaction at 150°C, raise the temperature to 200°C and raise the stirring speed to 500 r/min, and turn off the high-shear dispenser; dry the mixture for 3 h; and cohesive primary particles obtained are high-purity nano lithium sulfide.
(4) Ball milling: Load the cohesive particles in the ball mill and ball mill the same at 400 r/min for 3 h, to obtain high-purity nano lithium sulfide.
(5) Demagnetization: After ball milling, load high-purity lithium sulfide in a demagnetizer for demagnetization and set magnetic field intensity at 10,000 GS, to obtain high-purity lithium sulfide with magnetic material less than 50 ppb. See Table 1 for purity data of the product.

### Embodiment 7

(1) Nano wet milling: Add a high-purity raw material of lithium oxide and 4N hydroxylamine reducing agent available in the market in a mill pot according to a mole ratio of Li₂O:hydroxylamine=1:2, and ball mill the mixture at 600 rpm in the ball mill for 1 h, to obtain a homogeneous nano slurry of lithium oxide.
(2) Homogeneous reaction: Take high-purity sulfur powder and hydroxylamine according to a mole ratio of 1:2 and mix the same to obtain a sulfur slurry for further use; dropwise add the sulfur slurry and a lithium oxide slurry at the same time through a peristaltic pump according to a mole ratio of Li₂O:S=1:3 to a reactor with an anchor stirrer and a high-shear dispenser and mix the same; under the protection of an insert gas, start the high-shear dispenser for emulsification, and set a revolving speed of 3,000 r/min; stir the mixture at 300 r/min; after 1 hour of reaction at 150°C, raise the temperature to 200°C and raise the stirring speed to 500 r/min, and turn off the high-shear dispenser; dry the mixture for 3 h; and cohesive primary particles obtained are high-purity nano lithium sulfide.
(3) Ball milling: Load the cohesive particles in the ball mill and ball mill the same at 400 r/min for 3 h, to obtain high-purity nano lithium sulfide.
(4) Demagnetization: After ball milling, load high-purity lithium sulfide in a demagnetizer for demagnetization and set magnetic field intensity at 12,000 GS to obtain high-purity lithium sulfide with magnetic material less than 50 ppb. See Table 1 for purity data of the product.

**Table 1**

| **Sample name** | **Purity (%)** | **Na** | **K** | **Ca** | **Mg** | **Fe** | **Si** | **Al** | **Ti** |
|---|---|---|---|---|---|---|---|---|---|
| Li₂S - Embodiment 1 | 99.99435 | 0.0016 | 0.00057 | 0.000031 | 0.000029 | 0.00015 | 0.0026 | 0.00062 | 0.00005 |
| Li₂S - Embodiment 2 | 99.993549 | 0.0017 | 0.00062 | 0.000038 | 0.000033 | 0.00019 | 0.0028 | 0.00069 | 0.00038 |
| Li₂S - Embodiment 3 | 99.993033 | 0.0019 | 0.00073 | 0.000041 | 0.000046 | 0.00022 | 0.003 | 0.00057 | 0.00046 |
| Li₂S - Embodiment 4 | 99.993138 | 0.0025 | 0.00065 | 0.000063 | 0.000039 | 0.00032 | 0.0022 | 0.00051 | 0.00058 |
| Li₂S - Embodiment 5 | 99.991937 | 0.0031 | 0.00043 | 0.000055 | 0.000028 | 0.00021 | 0.0031 | 0.00048 | 0.00066 |
| Li₂S - Embodiment 6 | 99.991995 | 0.0028 | 0.00054 | 0.000078 | 0.000047 | 0.00019 | 0.0032 | 0.00069 | 0.00046 |
| Li₂S - Embodiment 7 | 99.992769 | 0.0035 | 0.00071 | 0.000028 | 0.000033 | 0.00024 | 0.0016 | 0.00077 | 0.00035 |

## Claims

1. A method of preparing high-purity nano lithium sulfide, **characterized in that** the method comprises the following steps:
a. Material purification
Purification of reducing agent: purify hydrazine hydrate, anhydrous hydrazine and/or hydramine and remove impurities to obtain a high-purity reducing agent for further use;
Purification of lithium source: purify a lithium source to obtain a high-purity lithium source, the lithium source is battery grade lithium hydroxide monohydrate, lithium hydroxide anhydrous, high-purity lithium oxide and/or battery grade lithium carbonate;
b. Nano wet milling: take the high-purity reducing agent and high-purity lithium source in step a according to a mole ratio of 1: 1 - 3 and blend the same, wherein the particles obtained are the high-purity lithium slurry of nano grade and homogeneous dispersion;
c. Homogeneous reaction: take a high-purity sulfur powder and dissolve the same in the high-purity reducing agent in step a to obtain a sulfur slurry; dropwise add the sulfur slurry and the high-purity lithium source slurry to a reactor at the same time and mix the same; under the protection of inert atmosphere, the mixture begins to react and dry and a small portion of cohesive and high-purity lithium sulfide is obtained;
d. Ball milling: a small portion of cohesive and high-purity lithium sulfide in step c is ball milled and homogeneously dispersed nano and high-purity lithium sulfide is obtained.

2. The method of preparing high-purity nano lithium sulfide according to claim 1, **characterized in that**: in step a,
when the lithium source is battery grade lithium hydroxide monohydrate and lithium hydroxide anhydrous, the lithium source is dissolved in high-purity water to prepare lithium solution, and the lithium solution is dried, heated and discomposed to obtain the lithium hydroxide anhydrous with a water content < 5%;
when the lithium source is battery grade lithium carbonate, the lithium source is purified with a carbonation-decomposition method;
when the lithium source is high-purity lithium oxide, no purification is required;
in step a, when the lithium source is battery grade lithium hydroxide monohydrate and lithium hydroxide anhydrous, the lithium solution (Li₂O) prepared is 60 - 80 g/L, dried in vacuum at low temperature of 75°C - 90°C; when the lithium source is battery grade lithium carbonate, the lithium source is mixed with water to prepare a slurry, and the slurry is further purified with the carbonation-decomposition method; and when the lithium source is high-purity lithium oxide, no purification is required.

3. The method of preparing high-purity nano lithium sulfide according to claim 1 or 2, **characterized in that**: the method also comprises at least one demagnetization to obtain a magnetic material less than 50 ppb; the magnetic field intensity for demagnetization is 8,000 - 12,000 GS.

4. The method of preparing high-purity nano lithium sulfide according to claim 1, **characterized in that**: the blending method in step b is to wet mill mixture with a ball mill at 300 rpm - 600 rpm for 1 h - 8 h.

5. The method of preparing high-purity nano lithium sulfide according to claim 1 or 2, **characterized in that**: the homogeneous reaction is carried out in a high-shear disperser; the revolving speed of the high-shear disperser is 2,000 r/min - 5,000 r/min; and the homogeneous reaction comprises: carrying out the reaction at 70°C - 150°C, 100 rpm - 300 rpm for 1 h - 3 h, rising the temperature to 200°C - 450°C, and carrying out the reaction at 300 rpm- 500 rpm for 1 h - 3 h.

6. The method of preparing high-purity nano lithium sulfide according to claim 1, **characterized in that**: in step c, when the reducing agent is hydrazine hydrate and/or anhydrous hydrazine, the high-purity sulfur power is mixed with the reducing agent according to a mole ratio of 1: 1 - 3 to prepare a sulfur solution; when the reducing agent is hydroxylamine, the high-purity sulfur power is mixed with the hydroxylamine according to a mole ratio of 1:2 - 4 to prepare a sulfur solution; and the mole ratio of the high-purity lithium slurry and the sulfur solution is Li₂O:S=1:1 - 3.

7. A high-purity nano lithium sulfide is prepared with the method of preparing high-purity nano lithium sulfide according to any of claims 1 - 6.

8. The high-purity nano lithium sulfide according to claim 7, **characterized in that**: the particle size of the lithium sulfide is < 1,000 nm, the purity is ≥ 99.99%, and the magnetic material is < 50 ppb.

9. The high-purity nano lithium sulfide according to claim 7 or 8 is applied to a solid-state battery.

10. The purpose according to claim 9, **characterized in that**: the solid-state battery is a lithium-sulfur battery.
